# EUROPÄISCHE PATENTSCHRIFT

(11) **EP 1 659 466 B1**
(45) Veröffentlichungstag und Bekanntmachung des Hinweises auf die Patenterteilung: **28.07.2010**
(21) Anmeldenummer: 04027454.0
(22) Anmeldetag: 18.11.2004
(51) Int. Cl.: G05B 19/418

(54) **Rückwirkungsfreie Übertragung einer Identifikationsinformation auf Kommunikationsleitungen**
Transmission of identification data on communication lines
Transmission de données d' identification sur des lignes de communication

(43) Veröffentlichungstag der Anmeldung: 24.05.2006
(73) Patentinhaber: SIEMENS AKTIENGESELLSCHAFT, 80333 München (DE)
(72) Erfinder: Langenfelder, Frank, 90491 Nürnberg (DE); Sinn, Ulrich, 91056 Erlangen (DE)

(56) Entgegenhaltungen:
- EP-A- 1 338 935
- WO-A-02/078914
- US-A- 6 167 464

## Beschreibung

Rückwirkungsfreie Übertragung einer Identifikationsinformation auf Kommunikationsleitungen

Die Erfindung betrifft eine Anschlussbox und ein Verfahren zur Verbindung eines mobilen Geräts, insbesondere eines Bediengeräts für ein Automatisierungssystem, mit einer fest installierten Infrastruktur, wobei die Anschlussbox eine Identität besitzt, welche an das mobile Gerät übertragen wird.

Im Automatisierungsumfeld werden heutzutage vermehrt mobile Bediengeräte, sogenannte Mobile Operator Panels eingesetzt. Die mobilen Bediengeräte sind tragbar und können von einem Bediener einer Anlage an verschiedene Einheiten des Automatisierungssystems, beispielsweise speicherprogrammierbare Steuerungen oder auch Werkzeugmaschinen angeschlossen werden. Hierbei wird in der Regel eine sogenannte Anschlussbox (Connectivity Box) zur Verbindung des mobilen Bediengeräts mit der fest installierten Infrastruktur des Automatisierungssystems bzw. der automatisierten Anlage verwendet. Das Bediengerät wird dabei über ein Anschlusskabel mit der Anschlussbox verbunden.

Das mobile Bediengerät kommuniziert anschließend über die Anschlussbox und die notwendige Infrastruktur, beispielsweise ein Bussystem mit der speicherprogrammierbaren Steuerung oder auch einer numerischen Steuerung. Hierbei wird die Schnittstelle zwischen dem mobilen Bediengerät und der Anschlussbox von folgenden Signalen gebildet:
- Sendedaten (TXD),
- Empfangsdaten (RXD),
- Request to send (RTS) und
- Clear to send (CTS).

Dabei sind Sende- und Empfangsdaten immer mit der speicherprogrammierbaren Steuerung bzw. der numerischen Steuerung verbunden, während request to send und clear to send abhängig vom gewählten Schnittstellentyp ebenfalls mit der Steuerung verbunden sind.

Sind an einer Steuerung mehrere Anschlussboxen angeschlossen, über die zeitgleich mehrere mobile Bediengeräte mit der Steuerung verbunden sein können, kann die Information, welches mobile Bediengerät über welche Anschlussbox kommuniziert, erforderlich sein. Beispielsweise ermöglicht derartige Information, auf dem entsprechenden mobilen Bediengerät standortbezogene Dienste und Informationen anzubieten. Aus diesem Grund benötigt die Anschlussbox eine eindeutige Boxadresse bzw. Identität, die dem mobilen Bediengerät und damit dem Benutzer mitgeteilt wird.

Heutzutage sind Anschlussboxen zur Identifikation mit einem Ausgang ausgestattet, der anzeigt, ob ein mobiles Bediengerät angeschlossen ist oder nicht. Dieser die Identität anzeigende Ausgang kann an eine Steuerung angeschlossen und dort ausgewertet werden. Sind jedoch gleichzeitig mehrere mobile Bediengeräte über mehrere Anschlussboxen an eine Steuerung angeschlossen, so ist diese Information nicht mehr eindeutig.

In der EP 1 338 935 A1 wird eine Schnittstellenvorrichtung für ein Haushaltsgerät, in welchem eine Identifizierungsangabe gespeichert ist, mit Kommunikationsschnittstellen offenbart. Die Identifizierungsangabe wird dabei dauerhaft in der Schnittstellenvorrichtung abgespeichert. Die weitergegebene Identifizierungsangabe, z.B. an einen mittels der Schnittstellenvorrichtung angeschlossenen Laptop ist bei dieser Art der Weitergabe allerdings für alle Kommunikationsteilnehmer sichtbar.

Aufgabe der vorliegenden Erfindung ist daher, eine Anschlussbox und ein Verfahren anzugeben, welche bzw. welches eine Identität der Anschlussbox unter Berücksichtigung von auszuschließenden Störungen auf einfache Weise an ein verbundenes mobiles Gerät übermittelt.

Die Aufgabe wird gelöst durch eine Anschlussbox zur Verbindung eines mobilen Geräts, insbesondere eines Bediengeräts für ein Automatisierungssystem, mit einer fest installierten Infrastruktur, wobei die Anschlussbox eine Identität besitzt und wobei die Anschlussbox Signalleitungen zur Kommunikation zwischen dem mobilen Gerät und der fest installierten Infrastruktur aufweist, wobei mindestens eine der für die Kommunikation vorgesehenen Signalleitungen zur Übertragung der Identität der Anschlussbox an das mobile Gerät vorgesehen ist und wobei die Übertragung der Identität dadurch bewirkt wird, dass vor Beginn der Kommunikation zwischen dem mobilen Gerät und der fest installierten Infrastruktur der Aufbau einer Verbindung der mindestens eine Signalleitung mit dem mobilen Gerät vorgesehen ist, wobei eine Trennung der Signalleitung von der fest installierten Infrastruktur und eine Verbindung mit einer Steuerlogik vorgesehen ist.

Die Aufgabe wird weiterhin gelöst durch ein Verfahren zur Verbindung eines mobilen Geräts, insbesondere eines Bediengeräts für ein Automatisierungssystem, mit einer fest installierten Infrastruktur, mittels einer Anschlussbox, wobei die Anschlussbox eine Identität besitzt, bei dem die Identität oder Anschlussbox durch mindestens eine für eine Kommunikation zwischen dem mobilen Gerät und der fest installierten Infrastruktur vorgesehene Signalleitung an das mobile Gerät übertragen wird und die Übertragung der Identität durch Aufbau einer Verbindung der mindestens einen Signalleitung mit dem mobilen Gerät vor Beginn der Kommunikation zwischen dem mobilen Gerät und der fest installierten Infrastruktur erfolgt.

Der Erfindung liegt die Erkenntnis zugrunde, das es für den Bediener eines Automatisierungssystems bei Verwendung mehrerer mobiler Bediengeräte vorteilhaft ist, wenn die Identität der Anschlussbox, über die das mobile Bediengerät mit der fest installierten Infrastruktur verbunden ist, bekannt ist. Durch die bekannte Identität der Anschlussbox wird auch bei mehreren Anschlussboxen und mehreren Bediengeräten eine eindeutige Zuordnung von Bediengerät und Anschlussbox ermöglicht. Auf Basis der bekannten Identität der Anschlussbox lassen sich beispielsweise Dienste und Informationen standortbezogen anbieten, wobei die Signalleitung (4a) von der fest installierten Infrastruktur (3) getrennt wird und mit einer Steuerlogik (5) verbunden wird.

Bei der Übertragung der Identität der Anschlussbox werden gemäß der Erfindung keine eigenen oder zusätzlichen Leitungen im Anschlusskabel benötigt. Die vorhandene Infrastruktur im Anschlusskabel wird lediglich erweitert und kann somit für die Übertragung der Identität genutzt werden. Das Anschlusskabel bleibt gleich, die Anschlussbox wird erweitert. Dies ermöglicht zudem auch den Betrieb von mobilen Bediengeräten und Anschlussboxen, welche keine entsprechende Information, also die Identität der Anschlussbox, empfangen bzw. absenden können. Außerdem wird im Rahmen der Erfindung eine Störung oder eine Beeinträchtigung anderer Kommunikationsdienste ausgeschlossen. Dies erfolgt gemäß der Erfindung durch die Nutzung bereits vorhandener Signalleitungen, welche nach Übertragung der Identität der Anschlussbox an das mobile Bediengerät für die normale Datenübertragung verwendet werden können. Somit wird von der Anschlussbox die Identität vor Beginn der eigentlichen Kommunikation an das mobile Bediengerät übertragen.

Eine weitere vorteilhafte Ausbildung der Erfindung besteht darin, dass der Aufbau der Verbindung bei Anschluss des mobilen Geräts an die Anschlussbox und/oder bei Zuschaltung einer Betriebsspannung der Anschlussbox und/oder des mobilen Geräts vorgesehen ist. Durch diese vorteilhafte Ausgestaltung wird ermöglicht, dass die Identität der Anschlussbox an das mobile Bediengerät ebenfalls übertragen werden kann, wenn beide bereits miteinander verbunden sind über das Anschlusskabel, aber keine Spannung an den entsprechenden Geräten anliegt. Erst wenn die Geräte durch Zuschaltung der Betriebsspannung funktionsfähig werden und die Identität der Anschlussbox relevant wird, wird diese an das mobile Bediengerät übertragen.

Eine weitere vorteilhafte Ausbildung der Erfindung ist dadurch gekennzeichnet, dass vor Aufbau der Verbindung mindestens einer Signalleitung zur Übertragung der Identität mit dem mobilen Gerät eine Trennung der Signalleitung von der fest installierten Infrastruktur und eine Verbindung mit einer Steuerlogik vorgesehen ist. Durch das einfache Umschalten von der Signalübertragung zwischen mobilem Bediengerät und Steuerung auf eine Verbindung zwischen mobilem Bediengerät mit einer Steuerlogik in der Anschlussbox wird auf einfache Weise unter Nutzung vorhandener Signalleitungen die Übertragung der Identität der Anschlussbox ermöglicht. Hierbei ist die Steuerlogik in der Anschlussbox selber implementiert, was eine einfache Ausführung der entsprechenden Hardware ermöglicht.
Eine weitere vorteilhafte Ausbildung der Erfindung ist dadurch gekennzeichnet, dass eine zweite Signalleitung zur Übertragung eines Handshake-Protokolls vorgesehen ist. Hierdurch kann die Geschwindigkeit der Übertragung der Boxadresse gesteuert werden. Die Signalleitung zur Übertragung des Handshake-Protokolls setzt sich hierbei aus der RTS-Leitung vom mobilen Bediengerät zur Anschlussbox und der CTS-Leitung von der Anschlussbox zum mobilen Bediengerät zusammen. Die Sendung bzw. Übertragung der Adresse wird hierdurch koordiniert. Hierbei erfolgt ebenfalls eine Trennung der zweiten Signalleitung von der fest installierten Infrastruktur und eine Verbindung mit der Steuerlogik. Somit wird die vorhandene Infrastruktur auch für die Übertragung des Handshake-Protokolls genutzt. Eine Taktung der Übertragung erfolgt hierbei durch das mobile Bediengerät über die RTS-Leitung, welche vom mobilen Bediengerät zur Anschlussbox führt.

Eine weitere vorteilhafte Ausbildung der Erfindung ist dadurch gekennzeichnet, dass die Anschlussbox eine Kennung aufweist, wobei die Kennung zur Übertragung an das mobile Gerät vorgesehen ist. Neben der Identität kann die Anschlussbox somit ihren Typ, der beispielsweise Auskunft über die technischen Merkmale der Anschlussbox gibt, an das mobile Bediengerät übertragen. Auf Basis der Kennung ist es beispielsweise anderen Geräten möglich, sich auf die technischen Merkmale der Anschlussbox einzustellen.

Eine weitere vorteilhafte Ausbildung der Erfindung ist dadurch gekennzeichnet, dass die Anschlussbox Mittel zum Einstellen der Identität durch einen Benutzer aufweist. Dadurch wird die Adresse bzw. die Identität der Anschlussbox durch einen Anwender eines Bediengeräts einstellbar bzw. modifizierbar. Hierbei kann die Einstellung der Identität bzw. Adresse beispielsweise über Drehcodierschalter erfolgen. Beispielsweise kann in einer hexadezimalen Ausführung ein entsprechender Drehcodierschalter eine Einstellung von 16 Permutationen pro Schalter ermöglichen. Bei zwei Drehcodierschaltern macht das eine Anzahl von 256 verschiedenen Adressen bzw. Identitäten, womit beispielsweise auf einer Anlage 256 verschiedene Anschlussboxen unterschieden werden können.

Im Folgenden wird die Erfindung anhand der in den Figuren dargestellten Ausführungsbeispiele näher beschrieben und erläutert. Es zeigen:
- FIG 1: eine schematische Darstellung einer Anschlussbox zur Verbindung eines mobilen Geräts mit einer fest installierten Infrastruktur;
- FIG 2: eine schematische Darstellung einer Anschlussbox zur Übertragung ihrer Identität an das mobile Bediengerät vor Beginn der Kommunikation;
- FIG 3: eine schematische Darstellung eines Automatisierungs-systems mit einem mobilen Bediengerät;
- FIG 4: eine schematische Darstellung eines Automatisierungsgeräts mit mehreren mobilen Bediengeräten.

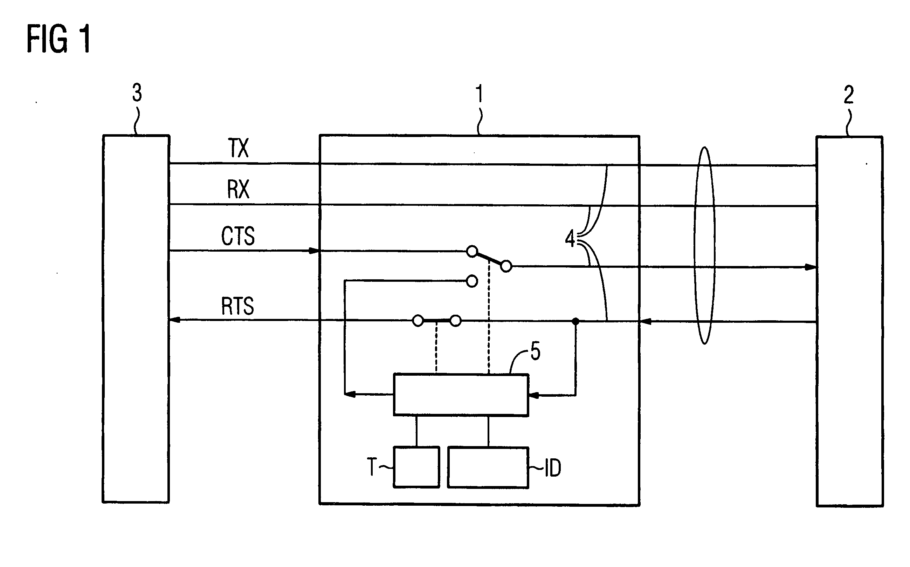

FIG 1 stellt eine Anschlussbox 1 dar, welche ein mobiles Gerät 2 mit einer Steuerung 3, welche die fest installierte Infrastruktur repräsentiert, verbindet. Hierbei erfolgt die Verbindung über Signalleitungen 4, welche für das Senden von Daten (TX) das Empfangen von Daten (RX) einen Request to send (RTS) und eine Clear to send (CTS) vorgesehen sind. Für die Steuerung der Datenübertragung werden die RTS-Leitung und die CTS-Leitung bei entsprechend vorhandenen Schnittstellentyp verwendet. Über die beiden Leitungen wird ein sogenanntes Handshake-Protokoll zur Steuerung der Geschwindigkeit der Datenübertragung übermittelt. Die Anschlussbox 1 verfügt über eine Steuerlogik 5 sowie über eine Identität ID und eine Kennung T.

Bei der Standardkommunikation zwischen dem mobilen Gerät 2 und der Steuerung bzw. der fest installierten Infrastruktur 3 sind die Leitungen 4 durch die Anschlussbox 1 durchgeschleift. D.h., dass alle Leitungen 4 zwischen mobilem Gerät 2 und Steuerung 3 durchgängig verbunden sind. Das mobile Gerät 2 und die Steuerung 3 können ungehindert kommunizieren.

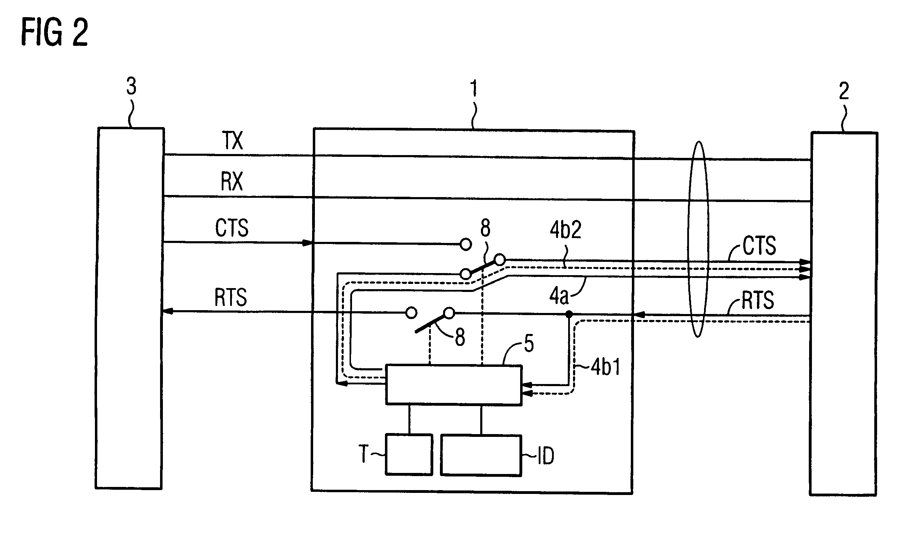

FIG 2 stellt eine Anschlussbox 1 dar, welche in einem Status vor Beginn der Kommunikation zwischen dem mobilen Gerät 2 und der Steuerung 3 ist. Beispielsweise ist gerade das Anschlusskabel eines mobilen Bediengerätes angeschlossen worden oder die Betriebsspannung von Anschlussbox 1 und mobilem Bediengerät wurde zugeschaltet. Durch die Steuerlogik 5 werden die Leitungen RTS und CTS von der Steuerung 3 getrennt und mit der Steuerlogik 5 verbunden. Dadurch ist das mobile Bediengerät 2 direkt mit der Steuerlogik 5 verbunden. Die Verbindung erfolgt beispielsweise über Schalter 8, wie in FIG 2 dargestellt. Eine Verbindung kann jedoch auch auf andere Weise erzeugt werden.

Die Identität ID bzw. die Adresse der Anschlussbox 1 wird anschließend über die Leitung 4a von der Anschlussbox 1 an das mobile Bediengerät 2 übertragen. Die Übertragung der Identität ID wird hierbei durch ein Handshake-Protokoll gesteuert. Hierzu werden Signale auf der RTS-Leitung 4b1 vom mobilen Gerät 2 zur Anschlussbox 1 und auf der CTS-Leitung 4b2 von der Anschlussbox 1 zum mobilen Gerät 2 übertragen. Auf der CTS-Leitung 4b2 wird auch die Identität ID von der Anschlussbox 1 zum mobilen Gerät 2 übertragen. Dies wird vom mobilen Gerät 2 durch einen Takt auf der RTS-Leitung 4b1 gesteuert. Zusätzlich zur Identität ID wird hierbei auch die Kennung T übertragen, welche den Typ der Anschlussbox 1 beschreibt. Nach erfolgter Übertragung wird die Steuerlogik 5 von den Leitungen RTS und CTS getrennt und die beiden Leitungen werden wieder durchgeschleift, so dass die Kommunikation zwischen mobilem Gerät 2 und Steuerung 3 aufgenommen werden kann.

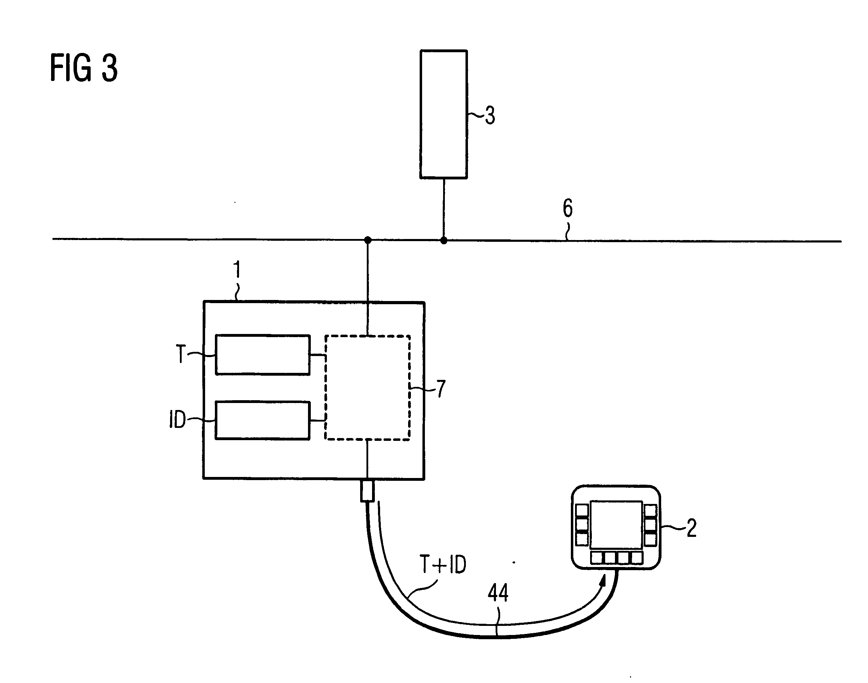

FIG 3 stellt eine Übersicht über ein Automatisierungssystem dar, bei dem eine Steuerung 3 oder eine andere Automatisierungskomponente über einen Feldbus oder ein Ethernet 6 mit einer Anschlussbox 1 verbunden ist. Die Anschlussbox 1 dient zum Anschluss eines mobilen Geräts 2, beispielsweise eines mobilen Bedienpanels, welches zur Bedienung der Steuerung bzw. des Automatisierungssystem verwendet wird. Das mobile Bediengerät 2 wird über ein Kabel 44 mit der Anschlussbox 1 verbunden. Die Anschlussbox 1 verfügt über eine Identität ID bzw. eine Boxadresse, welche beispielsweise von einem Anwender frei einstellbar ist. Die Identität ID kann beispielsweise über sogenannte Drehkodierschalter eingestellt werden. Weitere Einstellmöglichkeiten für die Identität sind beispielsweise das Programmieren in einer Engineering-Umgebung. Diese wird im Rahmen des Systems über die Infrastruktur bereitgestellt.

Weiterhin verfügt die Anschlussbox 1 über eine Kennung T, welche zur Beschreibung des Typs der Anschlussbox dient. In der Anschlussbox 1 ist eine Übertragungslogik 7 implementiert. Mit Hilfe der Übertragungslogik 7 werden bei Anschluss des mobilen Geräts 2 oder bei Zufuhr von Betriebsspannung die Identität ID und die Kennung T der Anschlussbox 1 an das mobile Gerät 2 übertragen. Dies erfolgt über vorhandene Leitungen im Anschlusskabel 44. Die Übertragung erfolgt vor Aufnahme der Kommunikation zwischen dem mobilen Gerät 2 und der zu bedienenden Steuerung 3.

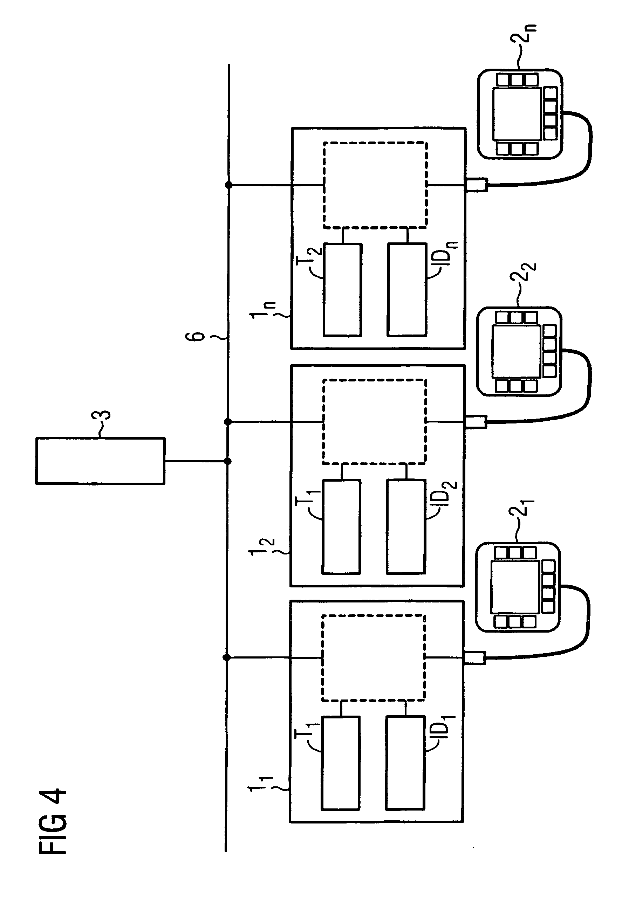

FIG 4 zeigt ein Ausführungsbeispiel, bei dem mehrere mobile Geräte 2₁, 2₂, 2ₙ an eine Steuerung 3 über ein Bussystem oder ein Ethernet 6 angeschlossen sind. Der Anschluss der mobilen Geräte erfolgt über verschiedene Anschlussboxen 1₁, 1₂ und In, welche jeweils über eine Identität ID₁, ID₂ und IDₙ verfügen. Die Anschlussboxen 1₁, 1₂ und 1ₙ verfügen ebenfalls über eine Kennung T₁, T₂. Sowohl Identität ID als auch Kennung T werden vor Beginn der Kommunikation zwischen dem mobilen Gerät 2 mit der Steuerung 3 von den jeweiligen Anschlussboxen 1₁, 1₂, 1ₙ an die an sie angeschlossenen mobilen Geräte übertragen. Hierdurch kann die jeweilige Identität der Anschlussbox ausgelesen werden und ist dem mobilen Gerät bekannt. Bei mehreren mobilen Bediengeräten und mehreren Anschlussboxen, welche an eine Steuerung 3 angeschlossen sind, ist somit die Identität ID über welche sich Dienste und Informationen standortbezogen anbieten lassen als auch die technischen Merkmale der verwendeten Anschlussbox bekannt.

Die Erfindung betrifft zusammenfassend eine Anschlussbox 1 und ein Verfahren zur Verbindung eines mobilen Geräts 2, insbesondere eines Bediengeräts für ein Automatisierungssystem, mit einer fest installierten Infrastruktur 3, wobei die Anschlussbox 1 eine Identität ID besitzt, welche an das mobile Gerät 2 übertragen wird. Der Anschluss des mobilen Geräts 2 erfolgt beispielsweise über ein Kabel, welches in die Anschlussbox 1 gesteckt wird. Hierbei werden für die Übertragung der Identität ID bzw. der Boxadresse die bereits vorhandenen Signalleitungen 4 genutzt. Für die Standardkommunikation sind die Leitungen durchgeschleift. Bei Anschluss eines mobilen Geräts 2 werden sie jedoch getrennt und auf der Seite des mobilen Geräts mit einer Steuerlogik 5 verbunden. Dadurch wird die Identität ID der Anschlussbox 1 an das mobile Gerät 2 übertragen.

## Patentansprüche

1. Anschlussbox (1) zur Verbindung eines mobilen Geräts (2), insbesondere eines Bediengeräts für ein Automatisierungssystem, mit einer fest installierten Infrastruktur (3), wobei die Anschlussbox (1) eine Identität (ID) besitzt und
• wobei die Anschlussbox (1) Signalleitungen (4) zur Kommunikation zwischen dem mobilen Gerät (2) und der fest installierten Infrastruktur (3) aufweist,
• wobei mindestens eine der für die Kommunikation vorgesehenen Signalleitungen (4a) zur Übertragung der Identität (ID) der Anschlussbox (1) an das mobile Gerät (2) vorgesehen ist,
**dadurch gekennzeichnet, dass**
die Übertragung der Identität (ID) dadurch bewirkt wird, dass vor Beginn der Kommunikation zwischen dem mobilen Gerät (2) und der fest installierten Infrastruktur (3) der Aufbau einer Verbindung der mindestens einen Signalleitung (4a) mit dem mobilen Gerät (2) vorgesehen ist, wobei eine Trennung der Signalleitung (4a) von der fest installierten Infrastruktur (3) und eine Verbindung mit einer Steuerlogik (5) vorgesehen ist.

2. Anschlussbox nach Anspruch 1, wobei der Aufbau der Verbindung bei Anschluss des mobilen Geräts (2) an die Anschlussbox (1) und/oder bei Zuschaltung einer Betriebsspannung der Anschlussbox (1) und/oder des mobilen Geräts (2) vorgesehen ist.

3. Anschlussbox nach einem der Ansprüche 1 oder 2, wobei die Steuerlogik (5) in der Anschlussbox (1) angeordnet ist.

4. Anschlussbox nach einem der vorhergehenden Ansprüche, wobei eine zweite Signalleitung (4b1, 4b2) zur Übertragung eines Handshake-Protokolls vorgesehen ist.

5. Anschlussbox nach Anspruch 4, wobei eine physikalische Leitung zur Realisierung der Signalleitungen (4a, 4b2) vorgesehen ist.

6. Anschlussbox nach Anspruch 4, wobei eine Trennung der zweiten Signalleitung (4b1, 4b2) von der fest installierten Infrastruktur (3) und eine Verbindung mit der Steuerlogik (5) vorgesehen ist.

7. Anschlussbox nach einem der Ansprüche 1 bis 7, wobei ein Takt auf der zweiten Signalleitung (4b1) zur Steuerung der Übertragung der Identität (ID) vorgesehen ist.

8. Anschlussbox nach einem der vorhergehenden Ansprüche, wobei die Anschlussbox (1) eine Kennung (T) aufweist und wobei die Kennung (T) zur Übertragung an das mobile Gerät (2) vorgesehen ist.

9. Anschlussbox nach einem der vorhergehenden Ansprüche, wobei die Anschlussbox (1) Mittel zum Einstellen der Identität (ID) durch einen Benutzer aufweist.

10. Anschlussbox nach Anspruch 9, wobei die Mittel zum Einstellen der Identität (ID) als Drehkodierschalter ausgebildet sind.

11. Anschlussbox nach Anspruch 10, wobei die Mittel zum Einstellen der Identität (ID) als Engineering-Umgebung ausgebildet sind.

12. Verfahren zur Verbindung eines mobilen Geräts (2), insbesondere eines Bediengeräts für ein Automatisierungssystem, mit einer fest installierten Infrastruktur (3), mittels einer Anschlussbox (1) wobei die Anschlussbox (1) eine Identität (ID) besitzt, bei dem die Identität (ID) der Anschlussbox (1) durch mindestens eine für eine Kommunikation zwischen dem mobilen Gerät (2) und der fest installierten Infrastruktur (3) vorgesehene Signalleitung (4a) an das mobile Gerät (2) übertragen wird,
**dadurch gekennzeichnet, dass**
die Übertragung der Identität (ID) durch Aufbau einer Verbindung der mindestens einen Signalleitung (4a) mit dem mobilen Gerät (2) vor Beginn der Kommunikation zwischen dem mobilen Gerät (2) und der fest installierten Infrastruktur (3) erfolgt, wobei die Signalleitung (4a) von der fest installierten Infrastruktur (3) getrennt wird und mit einer Steuerlogik (5) verbunden wird.

13. Verfahren nach Anspruch 12, bei dem der Aufbau der Verbindung bei Anschluss des mobilen Geräts (2) an die Anschlussbox (1) und/oder bei Zuschaltung einer Betriebsspannung der Anschlussbox (1) und/oder des mobilen Geräts (2) erfolgt.

14. Verfahren nach einem der Ansprüche 12 bis 13, bei dem ein Handshake-Protokoll durch eine zweite Signalleitung (4b1, 4b2) übertragen wird.

15. Verfahren nach Anspruch 14, bei dem die Signalleitungen (4a, 4b2) durch eine physikalische Leitung realisiert werden.

16. Verfahren nach Anspruch 14, bei dem die zweiten Signalleitung (4b1, 4b2) von der fest installierten Infrastruktur (3) getrennt und mit der Steuerlogik (5) verbunden wird.

17. Verfahren nach einem der Ansprüche 12 bis 16, bei dem die Übertragung der Identität (ID) durch einen Takt auf der zweiten Signalleitung (4b1) gesteuert wird.

18. Verfahren nach einem der Ansprüche 12 bis 17, bei dem die Anschlussbox (1) eine Kennung (T) an das mobile Gerät (1) überträgt.

19. Verfahren nach einem der Ansprüche 12 bis 18, bei dem die Identität (ID) der Anschlussbox (1) durch einen Benutzer eingestellt wird.

20. Verfahren nach Anspruch 19, bei dem die Identität (ID) mittels Drehkodierschalter eingestellt wird.

21. System zum Anschluss eines mobilen Gerätes (2), insbesondere eines Bediengerätes für ein Automatisierungssystem, an eine fest installierte Infrastruktur (3) mittels einer Anschlussbox (1) nach einem der Ansprüche 1 bis 11.

## Claims

1. Connectivity box (1) for connecting a mobile device (2), in particular an operator panel for an automation system, to a permanently installed infrastructure (3), wherein the connectivity box (1) possesses an identity (ID) and
• wherein the connectivity box (1) has signal lines (4) for enabling communication between the mobile device (2) and the permanently installed infrastructure (3),
• wherein at least one of the signal lines (4a) provided for enabling communication is provided for transmitting the identity (ID) of the connectivity box (1) to the mobile device (2),
**characterised in that**
the transmission of the identity (ID) is effected **in that** the establishment of a connection of the at least one signal line (4a) to the mobile device (2) is provided before the start of the communication between the mobile device (2) and the permanently installed infrastructure (3), wherein a separation of the signal line (4a) from the permanently installed infrastructure (3) and a connection to a control logic (5) are provided.

2. Connectivity box according to claim 1, wherein the establishment of the connection is provided when the mobile device (2) is connected to the connectivity box (1) and/or when an operating voltage of the connectivity box (1) and/or of the mobile device (2) is switched on.

3. Connectivity box according to one of claims 1 or 2, wherein the control logic (5) is disposed in the connectivity box (1).

4. Connectivity box according to one of the preceding claims, wherein a second signal line (4b1, 4b2) is provided for transmitting a handshake protocol.

5. Connectivity box according to claim 4, wherein a physical line is provided for implementing the signal lines (4a, 4b2).

6. Connectivity box according to claim 4, wherein a separation of the second signal line (4b1, 4b2) from the permanently installed infrastructure (3) and a connection to the control logic (5) are provided.

7. Connectivity box according to one of claims 1 to 6, wherein a timing signal is provided on the second signal line (4b1) for the purpose of controlling the transmission of the identity (ID).

8. Connectivity box according to one of the preceding claims, wherein the connectivity box (1) has an identifier (T) and wherein the identifier (T) is provided for transmission to the mobile device (2).

9. Connectivity box according to one of the preceding claims, wherein the connectivity box (1) has means enabling the identity (ID) to be set by a user.

10. Connectivity box according to claim 9, wherein the means for setting the identity (ID) are embodied as rotary coding switches.

11. The connectivity box according to claim 10, wherein the means for setting the identity (ID) are embodied as an engineering environment.

12. Method for connecting a mobile device (2), in particular an operator panel for an automation system, to a permanently installed infrastructure (3) by means of a connectivity box (1), wherein the connectivity box (1) possesses an identity (ID), in which method the identity (ID) of the connectivity box (1) is transmitted to the mobile device (2) by means of at least one signal line (4a) provided for enabling communication between the mobile device (2) and the permanently installed infrastructure (3),
**characterised in that**
the identity (ID) is transmitted through establishment of a connection of the at least one signal line (4a) to the mobile device (2) before the start of the communication between the mobile device (2) and the permanently installed infrastructure (3), wherein the signal line (4a) is separated from the permanently installed infrastructure (3) and connected to a control logic (5).

13. Method according to claim 12, wherein the connection is established when the mobile device (2) is connected to the connectivity box (1) and/or when an operating voltage of the connectivity box (1) and/or of the mobile device (2) is switched on.

14. Method according to one of claims 12 to 13, wherein a handshake protocol is transmitted by means of a second signal line (4b1, 4b2).

15. Method according to claim 14, wherein the signal lines (4a, 4b2) are implemented by means of a physical line.

16. Method according to claim 14, wherein the second signal line (4b1, 4b2) is separated from the permanently installed infrastructure (3) and connected to the control logic (5).

17. Method according to one of claims 12 to 16, wherein the transmission of the identity (ID) is controlled by means of a timing signal on the second signal line (4b1).

18. Method according to one of claims 12 to 17, wherein the connectivity box (1) transmits an identifier (T) to the mobile device (1).

19. Method according to one of claims 12 to 18, wherein the identity (ID) of the connectivity box (1) is set by a user.

20. Method according to claim 19, wherein the identity (ID) is set by means of rotary coding switches.

21. System for connecting a mobile device (2), in particular an operator panel for an automation system, to a permanently installed infrastructure (3) by means of a connectivity box (1) according to one of claims 1 to 11.

## Revendications

1. Boîte de connexion pour la liaison d'un appareil ( 2 ) mobile, notamment d'un appareil de service pour un système d'automatisation, comprenant une infrastructure ( 3 ) installée de manière fixe, la boîte ( 1 ) de connexion ayant une identité ( ID ) et
• dans laquelle la boîte ( 1 ) de connexion a des lignes ( 4 ) de signal pour la communication entre l'appareil ( 2 ) mobile et l'infrastructure ( 3 ) installée de manière fixe,
• dans laquelle au moins l'une des lignes ( 4a ) de signal prévues pour la communication est prévue pour la transmission de l'identité ( ID ) de la boîte ( 1 ) de connexion à l'appareil ( 2 ) mobile,
**caractérisé en ce que**
la transmission de l'identité est provoquée par le fait qu'avant le début de la communication entre l'appareil ( 2 ) mobile et l'infrastructure ( 3 ) installée de manière fixe, il est prévu l'établissement d'une liaison de la au moins une ligne ( 4a ) de signal avec l'appareil ( 2 ) mobile, une séparation de la ligne ( 4a ) de signal de l'infrastructure ( 3 ) installée de manière fixe et une liaison à une logique ( 5 ) de commande étant prévues.

2. Boîte de connexion suivant la revendication 1, dans laquelle il est prévu l'établissement de la liaison, lors de la connexion de l'appareil ( 2 ) mobile à la boîte ( 1 ) de connexion et/ou lors de l'application d'une tension de fonctionnement de la boîte ( 1 ) de connexion et/ou d'appareil ( 2 ) mobile.

3. Boîte de connexion suivant l'une des revendications 1 ou 2, dans laquelle la logique ( 5 ) de commande est disposée dans la boîte ( 1 ) de connexion.

4. Boîte de connexion suivant l'une des revendications précédentes, dans laquelle il est prévu une deuxième ligne ( 4b1, 4b2 ) de signal pour la transmission d'un rapport handshake.

5. Boîte de connexion suivant la revendication 4, dans laquelle il est prévu une ligne physique pour la réalisation des lignes ( 4a, 4b2 ) de signal.

6. Boîte de connexion suivant la revendication 4, dans laquelle il est prévu une séparation de la deuxième ligne ( 4b1, 4b2 ) de signal de l'infrastructure ( 3 ) installée de manière fixe et une liaison avec la logique ( 5 ) de commande.

7. Boîte de connexion suivant l'une des revendications 1 à 6, dans laquelle il est prévu une horloge sur la deuxième ligne ( 4b1 ) de signal pour la commande de la transmission de l'identité ( ID ).

8. Boîte de connexion suivant l'une des revendications précédentes, dans laquelle la boîte ( 1 ) de connexion a une caractéristique ( T ) et la caractéristique ( T ) est prévue pour la transmission à l'appareil ( 2 ) mobile.

9. Boîte de connexion suivant l'une des revendications précédentes, dans laquelle la boîte ( 1 ) de connexion a des moyens d'établissement de l'identité ( ID ) par un utilisateur.

10. Boîte de connexion suivant la revendication 9, dans laquelle les moyens d'établissement de l'identité ( ID ) sont constitués sous la même forme d'un commutateur tournant de codage.

11. Boîte de connexion suivant la revendication 10, dans laquelle les moyens d'établissement de l'identité ( ID ) sont constitués sous la forme d'un environnement engineering.

12. Procédé de liaison d'un appareil ( 2 ) mobile, notamment d'un appareil de service pour un système d'automatisation, comprenant une infrastructure ( 3 ) installée d'une manière fixe au moyen d'une boîte ( 1 ) de connexion, la boîte ( 1 ) de connexion ayant une identité ( ID ), dans lequel on transmet à l'appareil ( 2 ) mobile l'identité ( ID ) de la boîte ( 1 ) de connexion par au moins une ligne ( 4a ) de signal prévue pour une communication entre l'appareil ( 2 ) mobile et l'infrastructure ( 3 ) installée de manière fixe, **caractérisé en ce que** l'on effectue la transmission de l'identité ( ID ) par l'établissement d'une liaison de la au moins une ligne ( 4a ) de signal avec l'appareil ( 2 ) mobile avant le début de la communication entre l'appareil ( 2 ) mobile et l'infrastructure ( 3 ) installée de manière fixe, la ligne ( 4 ) de signal étant séparée de l'infrastructure ( 3 ) installée de manière fixe et étant reliée à une logique ( 5 ) de commande.

13. Procédé suivant la revendication 12, dans lequel on effectue l'établissement de la liaison lors de la connexion de l'appareil ( 2 ) mobile à la boîte ( 1 ) de connexion et/ou lors de l'application d'une tension de fonctionnement de la boîte ( 1 ) de connexion et/ou de l'appareil ( 2 ) mobile.

14. Procédé suivant 1"une des revendications 12 à 13, dans lequel on transmet un rapport handshake par une deuxième ligne ( 4b1, 4b2 ) de signal.

15. Procédé suivant la revendication 14, dans lequel on réalise les lignes ( 4a, 4b2 ) de signal par une ligne physique.

16. Procédé suivant la revendication 14, dans lequel on sépare la deuxième ligne ( 4b1, 4b2 ) de signal de l'infrastructure ( 3 ) installée de manière fixe et on la relie à la logique ( 5 ) de commande.

17. Procédé suivant l'une des revendications 12 à 16, dans lesquelles on commande la transmission d'identité ( ID ) par une horloge de la deuxième ligne ( 4b1 ) de signal.

18. Procédé suivant l'une des revendications 12 à 17, dans lesquelles la boîte ( 1 ) de connexion transmet une caractéristique ( T ) à l'appareil ( 1 ) mobile.

19. Procédé suivant l'une des revendications 12 à 18, dans lesquelles l'identité de la boîte ( 1 ) de connexion est établie par un utilisateur.

20. Procédé suivant la revendication 19, dans lequel l'identité ( ID ) est établie au moyen d'un commutateur tournant de codage.

21. Système de connexion d'un appareil ( 2 ) mobile, notamment d'un appareil de service pour un système d'automatisation, à une infrastructure ( 3 ) installée de manière fixe au moyen d'une boîte ( 1 ) de connexion suivant l'une des revendications 1 à 11.
